# FASCICULE DE BREVET EUROPEEN

(11) **EP 3 418 023 B1**
(45) Date de publication et mention de la délivrance du brevet: **27.10.2021**
(21) Numéro de dépôt: 17177404.5
(22) Date de dépôt: 22.06.2017
(51) Int. Cl.: B29C 45/78, B29C 35/02, A44C 5/00, A44C 27/00, B32B 7/12, B32B 9/00, B32B 9/04, B32B 15/02, B32B 15/06, B32B 15/18, B32B 25/04, B32B 25/12, B32B 25/14, B29K 21/00, B29K 705/00

(54) **PROCÉDÉ DE FABRICATION D'UN COMPOSANT HORLOGER EN ÉLASTOMÈRE**
VERFAHREN ZUR HERSTELLUNG EINER UHRENKOMPONENTE AUS ELASTOMER
METHOD FOR MANUFACTURING AN ELASTOMER CLOCK COMPONENT

(43) Date de publication de la demande: 26.12.2018
(73) Titulaire: ROLEX SA, 1211 Genève 26 (CH)
(72) Inventeur: CELANT, Benjamin, 74800 Cornier (FR); MINCONE, Laurent, 74520 Jonzier-Epagny (FR)
(74) Mandataire: Moinas & Savoye SARL

(56) Documents cités:
- EP-A1- 1 350 438
- EP-A1- 2 316 299
- JP-A- H02 310 019
- JP-A- H06 253 910
- US-A- 5 135 694
- US-A- 5 213 739

## Description

### Introduction

La présente invention concerne un procédé de fabrication d'un composant horloger en élastomère, particulièrement un bracelet, comprenant un insert métallique.

### Etat de l'Art

De nombreux bracelets utilisés pour des applications horlogères sont formés d'un insert métallique recouvert d'un matériau élastomère, pour cumuler les avantages complémentaires des deux matériaux, et obtenir notamment un bracelet souple et confortable offrant un maintien suffisamment ferme autour du poignet d'un utilisateur.

Un procédé de fabrication traditionnel d'un tel bracelet consiste à disposer un insert métallique, revêtu en surface d'un primaire formant une couche d'accrochage, au sein d'un moule d'injection dans lequel le matériau élastomère est injecté ou compressé, de sorte à prendre sa forme finale prédéfinie par le moule, après sa vulcanisation, tout en adhérant parfaitement sur toute la surface de l'insert métallique par le biais du primaire. Le matériau élastomère est ainsi surmoulé sur l'insert métallique.

Le document US5135694 décrit un bracelet comprenant une âme métallique pour former une antenne.

Le document US5213739 porte spécifiquement sur un procédé pour fabriquer un silent bloc, comprenant la fixation d'un élastomère sur une partie métallique beaucoup plus massive que celle d'un composant horloger. Le document EP1350438 décrit une lunette de montre dont la surface supérieure combine la présence d'une couche de caoutchouc et de diamants sertis dans le métal de la lunette.

Le document EP2316299 décrit la réalisation d'une couche en élastomère sur un élément métallique pour bracelet ou pour une couronne de montre.

Il existe une tendance actuelle à un développement des composants horlogers formés par cette combinaison entre un élément métallique et un matériau élastomère.

Ainsi, l'invention a pour objectif général d'améliorer le procédé de fabrication traditionnel décrit ci-dessus pour lui permettre une utilisation étendue, adaptée à des nouvelles applications horlogères, par exemple pour des composants horlogers de formes diversifiées et/ou aux propriétés mécaniques nouvelles, et de manière compatible avec une utilisation de matériaux choisis parmi une liste élargie.

### Brève description de l'invention

A cet effet, l'invention repose sur un procédé de fabrication d'un composant horloger comprenant :
- une première étape consistant à disposer un insert métallique dans un moule d'injection, une surface dudit insert métallique étant au moins partiellement revêtue d'un primaire,
- une deuxième étape d'injection d'un matériau élastomère dans le moule d'injection pour surmouler le matériau élastomère sur l'insert métallique,
- une troisième étape dite de vulcanisation du matériau élastomère, caractérisé en ce que la température du moule d'injection est variable, le procédé comprenant une étape d'augmentation de la température du moule d'injection entre une première température à un premier instant durant la deuxième étape d'injection, et une deuxième température supérieure à la première température à un deuxième instant, durant la troisième étape de vulcanisation.

Le procédé comprend aussi une première phase au cours de laquelle le moule d'injection atteint notamment la première température, et une deuxième phase consistant à chauffer le moule d'injection à la deuxième température correspondant sensiblement à la température de vulcanisation du matériau élastomère, lors de l'étape de vulcanisation, permettant de vulcaniser le matériau élastomère injecté lors de l'étape d'injection, la première température étant inférieure à la température maximale admissible par ledit primaire, la température maximale admissible étant la température à laquelle le primaire se dégrade.

Le composant horloger comprend une âme métallique recouverte d'un matériau élastomère, caractérisé en ce que l'âme métallique comprend un rapport surface sur volume supérieur ou égal à 1, voire supérieur ou égal à 10, voire supérieur ou égal à 20, et/ou en ce que l'âme métallique comprend une zone de faible épaisseur inférieure ou égale à 5 mm, voire inférieure ou égale à 2 mm, voire inférieure ou égale à 0.5 mm.

Ce composant horloger comprend avantageusement une couche d'adhésion entre le matériau élastomère et l'âme métallique assurant l'adhésion du matériau élastomère autour de l'âme métallique. Cette couche d'adhésion s'étend avantageusement sur toute la surface de contact entre le matériau élastomère et l'âme métallique, assurant leur adhésion sur toute leur surface de recouvrement.

L'invention est précisément définie par les revendications.

### Brève description des figures

Ces objets, caractéristiques et avantages de l'invention seront exposés en détail dans la description suivante d'un mode de réalisation particulier fait à titre non-limitatif en relation avec les figures jointes parmi lesquelles :
La figure 1 représente l'évolution classique de différentes températures lors de la mise en œuvre du procédé de fabrication traditionnel de l'état de la technique.
La figure 2 représente l'évolution des mêmes différentes températures lors de la mise en œuvre du procédé de fabrication traditionnel de l'état de la technique selon un nouveau scénario à risque.
La figure 3 représente l'évolution des mêmes différentes températures lors de la mise en œuvre du procédé de fabrication selon un mode de réalisation de l'invention dans le même scénario dit à risque.
La figure 4 représente schématiquement le procédé de fabrication d'un composant horloger selon un mode de réalisation de l'invention.

Le procédé de fabrication traditionnel d'un bracelet, qui sera amélioré et qui pourra être appliqué à tout composant horloger, comprend plus précisément une première étape E1 consistant à disposer un insert métallique dans un moule d'injection préchauffé, la surface de l'insert étant recouverte d'un primaire. Il comprend ensuite une deuxième étape d'injection E2 consistant en l'injection du matériau élastomère, puis une troisième étape dite troisième étape de vulcanisation E3 du matériau élastomère consistant en un chauffage du matériau élastomère à une température permettant la formation des liaisons chimiques qui vont assurer le maintien en forme de la pièce. Enfin, dans une quatrième étape E4, le moule est ouvert et le composant terminé est démoulé et refroidi.

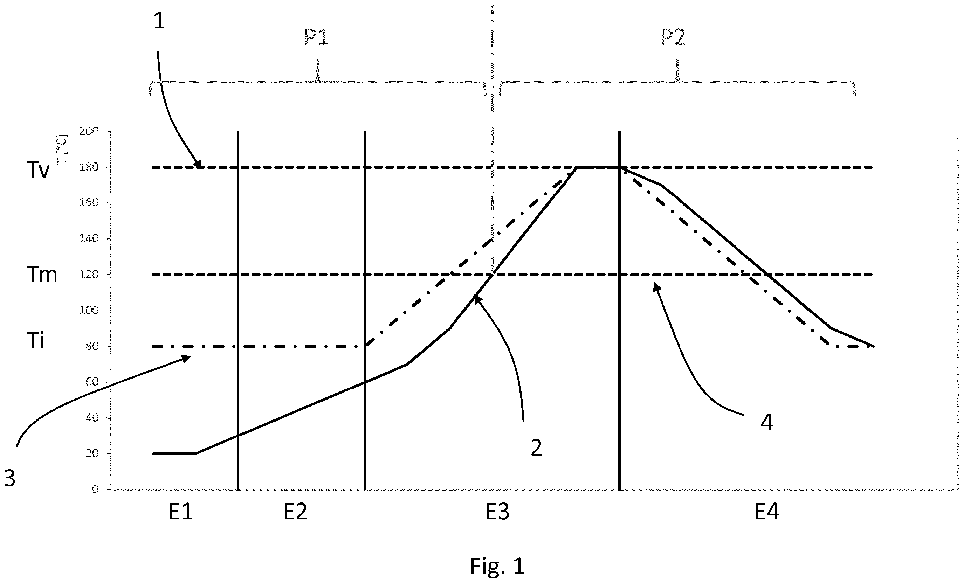

La figure 1 représente l'évolution de la température du moule d'injection (courbe 1), l'évolution de la température en surface de l'insert métallique (courbe 2) et l'évolution de la température du matériau élastomère (courbe 3) lors d'une mise en œuvre classique du procédé de fabrication traditionnel selon l'état de la technique mentionné ci-dessus.

Dans la mise en œuvre de ce procédé de manière classique, le moule est porté dès le début du procédé à une température de travail élevée, qui correspond à la température de vulcanisation Tv du matériau élastomère choisi. Cette température du moule est ensuite maintenue constante à cette valeur durant tout le procédé de fabrication. Le matériau élastomère est injecté à une température d'injection Ti, puis sa température augmente sous l'effet de la chaleur apportée par le moule, durant la troisième étape E3, jusqu'à atteindre sa température de vulcanisation Tv qui lui permet de se stabiliser dans sa forme définitive. Durant ce procédé, on constate une hausse de température de la surface de l'insert métallique dès la mise en place de l'insert lors de la première étape E1, puis une poursuite de cette hausse durant la deuxième étape d'injection E2 et la troisième étape de vulcanisation E3. Sa température converge vers la température du moule (qui est donc aussi la température de vulcanisation Tv), qui sera atteinte au plus tard en fin de la troisième étape de vulcanisation E3. Enfin, les températures du matériau élastomère et de l'insert métallique diminuent naturellement durant la quatrième étape E4 durant laquelle le composant fini est démoulé. Le moule quant à lui conserve sa température de travail proche de Tv.

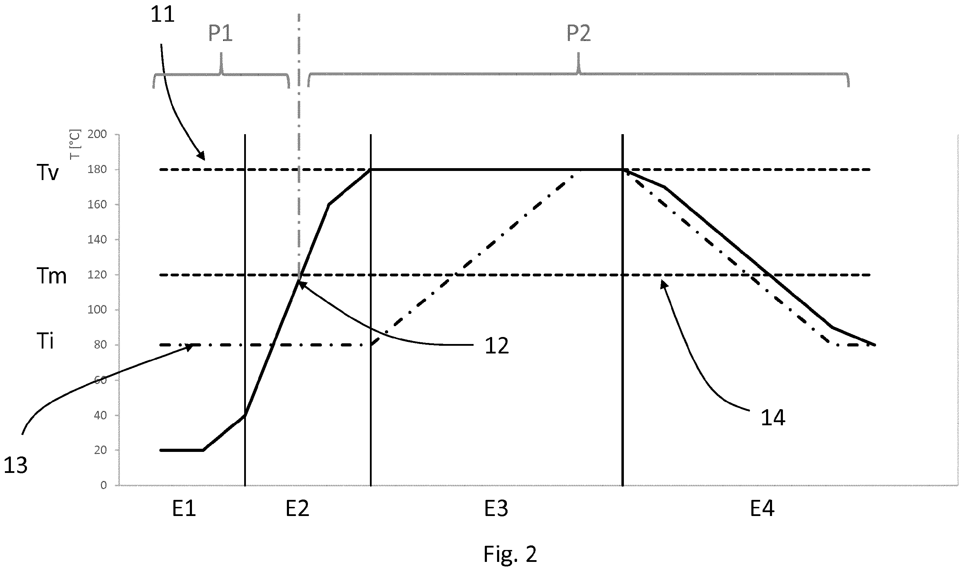

Selon l'invention, il a été imaginé de fabriquer un composant horloger nouveau, ce qui pourrait entraîner des risques avec le procédé de fabrication traditionnel. A titre d'exemple, un tel composant pourrait comporter un insert métallique présentant une surface importante rapportée sur son volume, comme une lame mince, ou présentant une faible inertie thermique, et pourrait par exemple être réalisé en or, en argent ou en cuivre, par exemple sous la forme d'une lame métallique en vue de fabriquer un brin de bracelet ou sous la forme de composants horlogers de petite dimension. La figure 2 représente les mêmes courbes que celles de la figure 1 dans un tel nouveau scénario. La courbe 11 de température du moule et la courbe 13 de température du matériau élastomère restent inchangées : en effet, la température du moule est toujours imposée à la température de vulcanisation Tv et reste constante à cette valeur durant tout le procédé, et la température du matériau élastomère évolue naturellement de la même manière entre sa première température imposée d'injection Ti et la deuxième température de vulcanisation Tv imposée par le moule. En revanche, la courbe 12, qui représente l'évolution de la température de surface de l'insert métallique en fonction du temps, évolue différemment : en effet, dans cette nouvelle utilisation, la température de surface de l'insert augmente beaucoup plus rapidement que celle d'un insert plus massif tel que celui correspondant à la figure 1, ce qui est causé par la géométrie particulière et/ou le matériau particulier de cet insert métallique qui favorise la conduction de chaleur vers sa surface. On s'aperçoit dans ce scénario que cette température pourrait atteindre ou s'approcher fortement de la température du moule, c'est-à-dire la température de vulcanisation Tv, avant la fin de la deuxième étape d'injection E2.

La fabrication d'un tel nouveau composant horloger pose ainsi un problème technique nouveau. En effet, lorsqu'on utilise un primaire déposé en surface de l'insert métallique, comme dans l'état de la technique, il convient de prendre en compte le fait qu'un tel primaire se dégrade à une température maximale Tm admissible, qui est représentée par les courbes 4, 14 sur respectivement les figures 1 et 2. Il se trouve qu'en général, cette température maximale Tm admissible d'un primaire présente une valeur comprise entre la température d'injection Ti et la température de vulcanisation Tv. Dans le cas de l'état de la technique illustré en figure 1, l'injection du matériau est terminée avant que la température de la surface de l'insert n'atteigne la température maximale admissible par le primaire Tm. En revanche, le scénario en cas d'utilisation du procédé traditionnel avec un insert de fort rapport surface/volume tel qu'illustré en figure 2 montre que la température de surface de l'insert métallique dépasse la température maximale Tm au cours de la deuxième étape d'injection E2, ce qui entraîne le risque de dégradation de tout ou partie du primaire déposé sur l'insert métallique. En cas d'une telle dégradation du primaire avant la fin de l'étape d'injection E2 du procédé, le matériau élastomère risque de ne pas adhérer correctement sur tout ou partie de la surface de l'insert métallique s'il atteint cette surface alors que le primaire est déjà dégradé. Lors de l'utilisation du composant ainsi formé, l'insert métallique pourrait alors bouger relativement au matériau élastomère dont il est revêtu, du fait du manque d'adhésion entre les deux éléments. Le comportement du composant horloger ainsi fabriqué s'en verrait modifié et l'insert rendu mobile au sein du composant pourrait même endommager le matériau élastomère par cisaillement. Autrement dit, l'utilisation du procédé de fabrication traditionnel ne permettrait pas de fabriquer de manière fiable un composant horloger dans certaines configurations particulières.

Naturellement, la figure 2 représente un scénario possible à titre d'exemple. Il existe une multitude d'autres scénarios possibles dans lesquels la courbe 12 pourrait prendre une autre forme, tout en comprenant une montée trop rapide et à risque durant l'étape d'injection du procédé, qui viendrait porter la température de la surface de l'insert à une température supérieure à la température maximale Tm admissible par le primaire.

Ce même risque pourrait de plus exister dans une autre alternative au procédé traditionnel, avec un primaire dit à basse température, avantageux car plus écologique, mais dont la température maximale Tm admissible serait réduite, c'est-à-dire que les courbes 4, 14 des figures 1 et 2 seraient abaissées. Dans une telle alternative, on serait naturellement plus exposé au risque d'une montée en température trop rapide de l'insert métallique, au-delà de la température maximale Tm, avant la fin de l'étape d'injection E2.

En résumé, le procédé de fabrication traditionnel d'un composant horloger surmoulé d'élastomère, tel que décrit en détail précédemment, est soumis à une première contrainte en température imposée par la température d'injection Ti du matériau élastomère, en général comprise entre 70 et 90 °C, sensiblement égale à 80 °C, et à une deuxième contrainte imposée par la température de vulcanisation de ce même matériau élastomère Tv, en général comprise entre 150 et 190 °C, sensiblement égale à 180 °C. Il est de plus soumis à une troisième contrainte en température, qui est la température maximale Tm admissible par le primaire, en général comprise entre 110 et 130 °C, sensiblement égale à 120 °C. Un nouveau problème technique, illustré précédemment, a été mis en évidence, consistant en un problème d'adhésion du matériau élastomère sur l'insert métallique dans certaines configurations particulières, du fait de ces contraintes en température qui peuvent apparaître incompatibles entre elles dans certaines alternatives envisagées. De ce fait, l'expansion du procédé de fabrication traditionnel est en fait limitée par ce problème technique mis en évidence et le procédé de fabrication traditionnel ne répond pas aux nouveaux besoins du domaine horloger.

Ainsi, l'invention propose une amélioration du procédé de fabrication traditionnel, dont un mode de réalisation va maintenant être décrit en détail ci-après, pour résoudre le nouveau problème technique détaillé ci-dessus et permettre une fabrication fiabilisée d'un composant horloger comprenant un matériau élastomère surmoulé sur un insert métallique.

Le concept de l'invention repose sur une température variable du moule d'injection, qui présente dans une première phase du procédé une température inférieure à la température en deuxième phase de procédé. Par cette variation de la température du moule d'injection, et l'abaissement de sa température dans la première phase du procédé, la surface d'un insert présent dans le moule va chauffer moins rapidement et de manière mieux contrôlée que dans le procédé traditionnel et le risque explicité précédemment sera réduit, voire supprimé. Une telle variation de température du moule d'injection, qui induit une variation de la température de surface de l'insert métallique, permet donc à elle seule d'apporter une amélioration par rapport au procédé traditionnel existant.

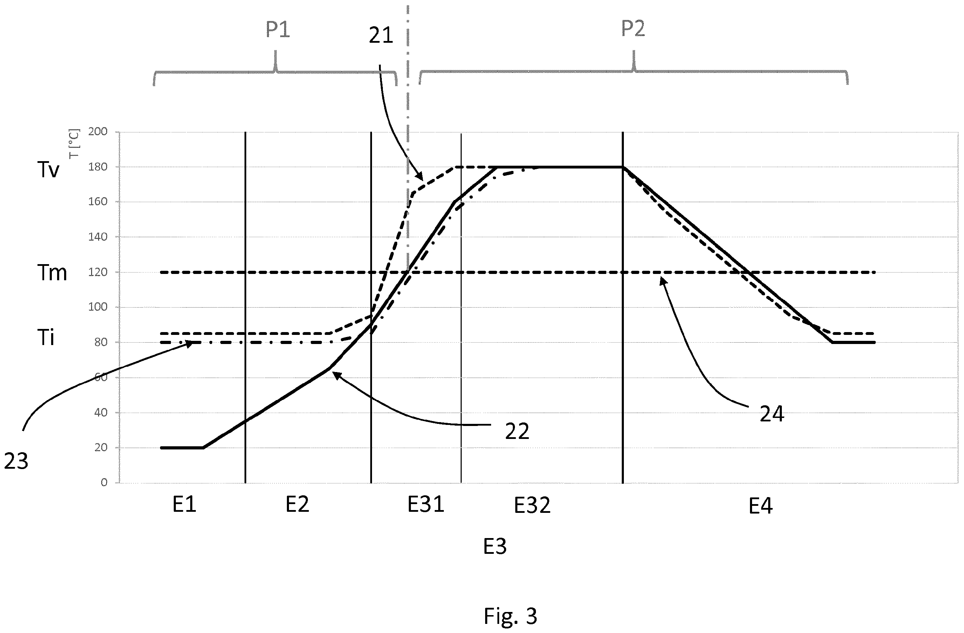

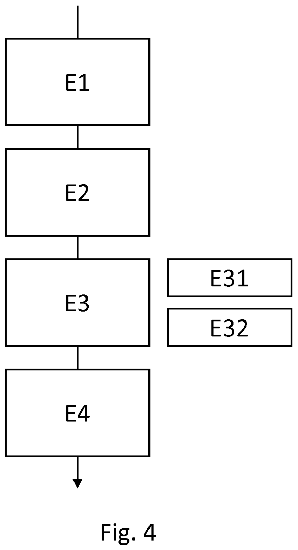

Un mode de réalisation détaillé de l'invention est notamment illustré par la figure 3, qui reproduit les différentes évolutions de température au cours du temps lors de la mise en œuvre du procédé de fabrication d'un composant horloger selon le mode de réalisation de l'invention, de manière similaire aux figures 1 et 2, dans le même scénario que celui de la figure 2. Le procédé de fabrication selon le mode de réalisation est aussi schématiquement illustré par la figure 4. Il se différencie du procédé de fabrication traditionnel en ce que la température du moule est variable, et comprend un maintien de la température en deçà de la température de dégradation du primaire d'adhésion lors de l'étape d'injection de l'élastomère, et un abaissement de la température du moule en fin de cycle. Le procédé de fabrication selon le mode de réalisation de l'invention comporte de plus, au sein de l'étape de vulcanisation E3 telle que décrite précédemment, une étape d'augmentation E31 de la température du moule d'injection visant à maximiser l'adhésion de l'élastomère sur l'insert et une étape de vulcanisation réelle E32 à proprement parler. Ces deux étapes E31 et E32 peuvent être successives ou en variante partiellement ou totalement simultanées. De plus, l'étape d'augmentation E31 de la température du moule d'injection peut éventuellement commencer légèrement avant la fin de l'étape d'injection E2. Ces étapes dépendent notamment du type d'élastomère et de la géométrie de l'insert métallique.

Dans ce mode de réalisation de l'invention, la température du moule est d'abord fixée à une première valeur réduite, de préférence sensiblement égale à la valeur de la température d'injection Ti. Elle est en tout cas maintenue suffisamment basse pour assurer que la température de la surface de l'insert placé dans le moule reste en deçà de la température de dégradation Tm du primaire d'adhésion jusqu'à sensiblement la fin de l'étape d'injection E2. Cette valeur de température est de préférence maintenue constante jusqu'à la fin de l'étape d'injection E2, donc durant toute la durée des première et deuxième étapes E1, E2 du procédé. Ensuite, durant l'étape d'augmentation E31 de la température, la température du moule d'injection est augmentée de manière contrôlée, préférentiellement avec des paliers de température permettant de maîtriser la température de l'insert métallique, jusqu'à la deuxième valeur correspondant à la température de vulcanisation Tv. La courbe 21 illustre ainsi l'évolution de la température du moule d'injection selon le mode de réalisation : elle présente une portion croissante, formant une rampe, pouvant être sensiblement linéaire sur une ou plusieurs parties, entre la fin de l'étape d'injection E2 et le début de l'étape de vulcanisation réelle E32, afin de passer progressivement de la température Ti à la température Tv susmentionnées. En variante, la courbe d'évolution de température entre la fin de l'étape d'injection E2 et le début de l'étape de vulcanisation réelle E32 peut comprendre un ou plusieurs paliers visant à consolider l'adhésion de l'élastomère sur l'insert. En remarque, pour simplifier la description, nous utilisons simplement le terme de « température » pour « valeur de température ». La courbe 23 représente l'évolution de la température du matériau élastomère. Cette température est sensiblement égale à la température d'injection Ti jusqu'à la fin de l'étape d'injection E2, puis augmente sous l'effet de l'augmentation de la température du moule jusqu'à atteindre la température de vulcanisation Tv au cours de la troisième étape E3. Un effet avantageux du mode de réalisation de l'invention est visible sur la courbe 22 d'évolution de la température de la surface de l'insert métallique. En effet, il apparaît que cette température augmente à partir de la température ambiante durant les deux première étapes E1, E2, tout en restant sous la température du moule, c'est-à-dire la température Ti dans l'exemple illustré, en fin de l'étape d'injection E2. Ainsi, cette solution garantit que la température de la surface de l'insert métallique ne pourra jamais dépasser un seuil de température choisi, qui est fixé par la température du moule. Naturellement, cette température est avantageusement choisie inférieure à la température maximale Tm admissible par le primaire. Par ce mode de réalisation, quand le matériau élastomère vient en contact avec la surface de l'insert métallique durant l'étape d'injection E2, il est assuré que la température de cette surface est inférieure à la température de dégradation du primaire, ce qui a pour résultat de garantir la bonne adhésion du matériau élastomère sur l'insert métallique. Le mode de réalisation répond donc bien au problème technique explicité précédemment.

En remarque, il apparaît que des variantes de réalisation sont facilement envisageables. Par exemple, la courbe 24 de la figure 3 pourrait correspondre à une température abaissée jusqu'à la valeur de la température du moule des étapes E1 et E2, soit la température d'injection Ti selon cet exemple, sans risque. Il sera donc possible d'utiliser tout primaire d'adhésion dont la température maximale Tm admissible se situe au-dessus de la température d'injection Ti de l'élastomère. Alternativement, la température du moule pourrait être différente de la température d'injection, par exemple supérieure ou inférieure à cette valeur de température d'injection. Avantageusement, toute solution dans laquelle la température du moule est inférieure à la température maximale admissible du primaire dans une première phase P1 du procédé de fabrication, qui peut s'étendre jusqu'à la fin de la deuxième étape d'injection E2, peut former une variante de réalisation de l'invention. Ces solutions ont pour effet de garantir que la montée de la température de la surface de l'insert métallique au-dessus de la température maximale Tm admissible du primaire aura lieu dans le cadre de la troisième étape E3 de vulcanisation, ce qui n'a pas d'effet dommageable sur l'adhésion qui est déjà parfaitement réalisée ; autrement dit, le primaire a déjà rempli sa fonction d'adhésion en fin de deuxième étape E2 du procédé. Dans tous les cas, ces solutions ont donc pour résultat que l'ensemble du matériau élastomère a le temps d'adhérer parfaitement à l'insert métallique sur toute sa surface, voire sur une partie seulement de surface prédéfinie de l'insert métallique.

Ainsi, le mode de réalisation de l'invention répond bien au nouveau problème technique identifié, en ayant pour effet de réduire l'augmentation de température en surface d'un insert métallique disposé dans un moule d'injection et en ayant pour résultat la bonne adhésion entre le matériau élastomère et l'insert métallique, dans toutes les hypothèses d'utilisation du procédé de fabrication.

Le mode de réalisation de l'invention permet ainsi par exemple de fabriquer un bracelet à partir d'un insert métallique se présentant sous la forme d'une lame métallique mince. Une telle lame métallique peut présenter une faible épaisseur, par exemple comprise entre 0.01 et 2 mm inclus, et/ou une grande surface, caractérisée par exemple par une largeur comprise entre 5 et 30 mm inclus et/ou une longueur comprise entre 2 et 200 mm inclus, s'approchant de la longueur totale d'un brin de bracelet. La spécificité d'un tel insert métallique sous forme de lame métallique mince est de permettre d'obtenir un bracelet suffisamment rigide pour être compatible avec des fermoirs et des dispositifs de fixation complexes et performants, tout en permettant d'obtenir un bracelet très fin, souple et ne présentant pas d'élongation lors de la sollicitation en traction du bracelet. Naturellement, un effet d'une telle lame métallique est de chauffer très rapidement en surface quand elle est positionnée en contact ou à proximité d'une source de chaleur, ce qui est défavorable lors de la mise en œuvre du procédé de fabrication, comme cela a été décrit précédemment. Toutefois, comme expliqué précédemment, le mode de réalisation de l'invention est compatible avec l'utilisation d'une telle lame métallique. Plus généralement, le mode de réalisation de l'invention est compatible avec un insert métallique de forme ou de matière quelconque susceptible de chauffer rapidement en surface, tel qu'une lame, un tube métallique, un fil métallique ou un assemblage de fils métalliques. Par exemple, un tel insert métallique présente typiquement un rapport surface sur volume supérieur ou égal à 20, voire supérieur ou égal à 10, voire supérieur ou égal à 1.

Outre les particularités géométriques mentionnées ci-dessus, un insert métallique peut aussi être susceptible de chauffer rapidement du fait de sa propriété de grande conductivité thermique. Ainsi, un tel insert peut être dans un matériau très conducteur comme en métal, particulièrement être en alliage d'or et/ou d'argent, ou en platine. Plus généralement, un tel insert peut présenter une conductivité thermique élevée, supérieure ou égale à 50 W/mK, voire supérieure ou égale à 100 W/mK, voire supérieure ou égale à 300 W/mK, voire même supérieure ou égale à 400 W/mK.

Enfin, le procédé de l'invention permet de fabriquer un composant horloger à partir d'un insert métallique combinant une géométrie particulière et une forte conductivité thermique.

Comme cela a été explicité ci-dessus, le procédé de fabrication selon le mode de réalisation de l'invention est de plus aussi avantageux en ce qu'il permet l'utilisation d'un primaire basse température en surface d'un insert métallique. Un tel primaire basse température se caractérise par une température maximale admissible inférieure ou égale à 100 °C, voire inférieure ou égale à 80 °C. De plus, le procédé selon le mode de réalisation de l'invention reste compatible avec tous les primaires. Ce primaire sera avantageusement choisi en fonction du métal et/ou du matériau élastomère. Il peut notamment être choisi parmi les produits suivants, connus par leur dénomination commerciale : CILBOND®, MEGUM®, THIXONTM®, ou CHEMOSIL®. La température maximale admissible de ces derniers primaires est sensiblement égale à 120 °C. Au-delà, le primaire se dégrade et ne remplit plus correctement sa fonction d'adhérence.

De manière complémentaire, le procédé de fabrication selon le mode de réalisation de l'invention est de plus aussi avantageux en ce qu'il modifie la quatrième étape traditionnelle qui devient une étape de refroidissement E4 consistant à abaisser la température du moule de manière contrôlée avant démoulage des composants après injection. Dans le procédé traditionnel, comme indiqué sur les figures 1 et 2, les pièces terminées sont retirées du moule encore chaud et refroidies de manière naturelle. Certains caoutchoucs présentent un risque de déchirement croissant avec la température, et des composants de géométrie complexe tels que ceux présentés dans le document EP2505095 peuvent s'avérer délicats à démouler à haute température. Le refroidissement du moule tel qu'il intervient dans le mode de réalisation en dernière étape de refroidissement E4 permet d'abaisser le risque de déchirement au démoulage des coussins tels que décrits au sein du document EP2505095. La température à partir de laquelle un composant complexe peut être démoulé en minimisant les risques de déchirement dépend de la géométrie du composant et du type de matériau.

Naturellement, le procédé de fabrication selon le mode de réalisation de l'invention n'est pas limité à une implémentation dans les exemples mentionnés explicitement, mais peut aussi être utilisé pour toute fabrication d'un composant horloger comprenant au moins un insert métallique recouvert d'au moins un matériau élastomère, y compris pour fabriquer un composant horloger existant et fabriqué dans l'état de la technique par le procédé de fabrication traditionnel. De plus, le composant horloger fabriqué peut être un bracelet, comme mentionné précédemment. Il peut aussi être une carrure revêtue de caoutchouc, une lunette revêtue d'un élastomère ou un composant de mouvement revêtu d'un élastomère, tel qu'un amortisseur par exemple.

Dans toutes les réalisations, le matériau élastomère peut être quelconque, par exemple un caoutchouc naturel ou synthétique. Selon un mode de réalisation, ce matériau peut être un fluoroélastomère, par exemple du type connu par sa dénomination commerciale de FKM. En remarque, un tel matériau élastomère est injecté dans un moule en phase pâteuse, puis prend sa forme finale stable, celle du moule, après sa vulcanisation, qui est généralement réalisée à une température sensiblement égale à 180° C, en tous cas à une température supérieure à la température d'injection, qui est généralement sensiblement égale à 80° C. En remarque, un élastomère se définit comme un polymère présentant des propriétés élastiques obtenues après réticulation. Il supporte de très grandes déformations avant rupture, et revient à sa forme initiale une fois la contrainte relâchée. Un élastomère ne doit pas être confondu avec un matériau thermoplastique. En revanche, l'invention s'applique aussi pour les combinaisons de matériaux comprenant un mélange entre un matériau élastomère et un autre matériau comme un thermoplastique (un tel exemple de mélange est aussi connu par la dénomination d'élastomère thermoplastique). Ainsi, nous entendons abusivement par le terme « matériau élastomère » un matériau qui peut comprendre moins de 100% de matériau élastomère, mais de préférence au moins 50% de matériau élastomère.

L'insert métallique peut se trouver en tout métal ou alliage métallique. Il peut notamment être un métal superélastique, par exemple un métal connu par sa dénomination commerciale Nitrinol. Il peut également être en métal comme un alliage d'or et/ou d'argent, ainsi qu'en platine, comme mentionné précédemment. En variante, il pourrait être dans un alliage choisi parmi les laitons ou les aciers. En alternative au métal, l'insert peut se présenter en d'autres matériaux surmoulables comme la céramique ou les cermets. Dans ce cas, l'invention permet d'utiliser des primaires à très faible température de dégradation.

Le procédé de fabrication d'un composant horloger selon un mode de réalisation de l'invention ne se limite pas aux exemples décrits précédemment. Ainsi, des variantes de réalisation sont envisageables, dans lesquelles la température du moule varie différemment de l'exemple illustré par la courbe 21 de la figure 3.

Dans tous les cas, cette température du moule est variable et présente au moins une valeur plus basse dans la première phase P1 du procédé comprenant tout ou partie de l'étape d'injection E2 que dans la deuxième phase P2 comprenant tout ou partie de l'étape de vulcanisation E3 du matériau élastomère. L'évolution de cette température entre ces deux valeurs de température peut être quelconque ; elle peut comprendre un ou plusieurs paliers de température. Ladite première phase P1 peut comprendre tout ou partie de l'étape d'injection E2, voire une partie de la troisième étape de vulcanisation E3. La deuxième phase P2 débute au moment où la température de surface de l'insert atteint la température maximale admissible du primaire d'adhésion, et se termine une fois la pièce complètement vulcanisée. Cette deuxième phase peut débuter pendant la troisième étape E3, ou en fin de la deuxième étape d'injection E2, voire légèrement avant la fin de cette deuxième étape d'injection E2 puisqu'il pourrait être constaté que la surface totale de l'insert métallique est totalement recouverte avant la fin de l'injection du matériau élastomère.

L'homme du métier saura fixer les différents paramètres de l'invention parmi les matériaux du composant horloger à fabriquer, l'élastomère, l'insert métallique et le primaire, leurs formes, la température du moule et son évolution dans le temps, en fonction de la température d'injection et de vulcanisation du matériau élastomère, et en fonction de la température maximale admissible du primaire. L'homme du métier fixera en effet ces paramètres de sorte à éviter un chauffage de la surface de l'insert métallique trop rapide, c'est-à-dire qui dépasserait la température maximale admissible du primaire.

Ainsi, selon des modes de réalisation de l'invention, le procédé de fabrication comprend tout ou partie des étapes suivantes :
- Une étape consistant à déposer un primaire d'adhésion en surface de l'insert métallique ;
- Une étape E1 consistant à placer ledit insert métallique dans le moule, puis à fermer le moule ;
- Une étape d'injection E2 consistant à injecter l'élastomère dans le moule ;
- Une étape de vulcanisation E3, segmentée en deux sous-étapes E31 et E32, consistant en l'augmentation E31 de la température du moule pour le porter à la température de vulcanisation de l'élastomère, et une étape de vulcanisation réelle E32 jusqu'à vulcanisation complète de l'élastomère ;
- Un ou plusieurs paliers de température entre l'étape d'injection E2 et l'étape de vulcanisation réelle E32 ;
- Une étape de refroidissement E4 consistant à refroidir le moule et à retirer le composant horloger ;
- Une étape d'augmentation E31 de la température du moule d'injection réalisée entre une première température à un premier instant de la deuxième étape d'injection E2 et une deuxième température à un deuxième instant de la troisième étape de vulcanisation E3 ;
- Une étape d'augmentation de la température réalisée entre deux valeurs basse et haute de température, cette augmentation pouvant être linéaire, selon une ou plusieurs rampe(s) ou selon toute autre courbe ;
- Une augmentation de la température présentant au moins un palier, voire deux ou plus de deux paliers ;
- Une augmentation de la température du moule d'injection débutant à une valeur suffisamment basse au début du procédé pour ne pas nécessiter de palier ou de ralentissement permettant d'éviter qu'elle n'atteigne la température de dégradation du primaire avant la fin de l'étape d'injection E2 ;
- Un chauffage du moule d'injection à une première température dite basse comprise entre 60 et 120 °C inclus, voire entre 70 °C et 110 °C inclus, voire sensiblement égale à 80 °C ou 100 °C;
- Le maintien de la première température pendant tout ou partie de l'étape d'injection ;
- Un chauffage du moule de la première température vers la deuxième température dite haute comprise entre 150 et 220 °C inclus, voire entre 160 °C et 200 °C inclus, par exemple sensiblement égale à 180 °C;
- Le maintien de la deuxième température jusqu'à la fin de l'étape de vulcanisation.

En parallèle à ces différentes étapes, le procédé selon l'invention comprend donc au moins deux phases P1 et P2, représentée sur les figures 1 à 3, la première phase P1 s'étendant de l'insertion de l'insert métallique dans le moule jusqu'à ce que la température de la surface dudit insert métallique atteigne la température maximale d'utilisation du primaire d'adhésion et la deuxième phase P2 s'étendant ensuite jusqu'à la vulcanisation complète de l'élastomère revêtant l'insert métallique et le retrait de la pièce du moule.

Le procédé selon l'invention implique donc un cycle thermique au niveau du moule d'injection, comprenant les caractéristiques suivantes :
- Une première plage de température dite basse, proche de la température d'injection de l'élastomère ;
- Une deuxième plage de température dite haute, à ou légèrement au-dessus de la température de vulcanisation de l'élastomère ;
- Une augmentation de la température entre lesdites deux valeurs basse et haute de température, cette augmentation pouvant être linéaire ou selon toute autre courbe ;
- Un abaissement de la température entre lesdites valeurs haute et basse de température, cette diminution pouvant être linéaire ou selon toute autre courbe.

Un dispositif de fabrication d'un composant horloger qui met en œuvre le procédé de fabrication est décrit. Pour cela, le dispositif de fabrication comprend un moule d'injection et un dispositif de régulation de la température du moule, comprenant par exemple un calculateur qui fixe une température de consigne choisie pour la température du moule, et commande un dispositif de chauffage du moule afin de suivre cette température de consigne. La température du moule d'injection est ainsi parfaitement maitrisée. Elle est contrôlée, voire régulée. De même, la température de surface de l'insert est aussi contrôlée, voire régulée. En effet, il est possible de calculer cette valeur de température de surface de l'insert, par estimation à partir des transferts thermiques, et/ou par mesure directe ou indirecte.

Selon une variante de réalisation, le procédé de fabrication d'un composant horloger peut comprendre une autre étape d'injection d'un deuxième matériau élastomère, qui est de préférence différent du premier matériau élastomère. Cette autre étape d'injection est réalisée dans le même moule d'injection que l'étape d'injection du premier matériau élastomère, qui peut comporter un tiroir. Lors de cette autre étape d'injection, qui suit l'étape de vulcanisation E3 du premier matériau, le moule d'injection est d'abord porté, par chauffage ou refroidissement, à une température qui garantit la bonne adhésion du deuxième matériau élastomère sur le premier matériau élastomère. Le moule sera ensuite chauffé à la température de vulcanisation du deuxième matériau pour en permettre la vulcanisation, puis refroidi pour permettre le démoulage du composant horloger.

Comme cela a été explicité, l'amélioration du procédé de fabrication traditionnel par l'invention permet de fabriquer des nouveaux composants horlogers. Particulièrement, un tel composant horloger comprend une âme métallique totalement ou partiellement recouverte par un matériau élastomère, cette âme métallique présentant au moins une zone de très faible épaisseur, inférieure ou égale à 5 mm, voire inférieure ou égale à 2 mm, voire inférieure ou égale à 0.5 mm. En variante, cette âme métallique comprend un rapport surface sur volume supérieur ou égal à 1, voire supérieur ou égal à 10, voire supérieur ou égal à 20.

Enfin, le composant horloger obtenu comprend une couche adhésive provenant du primaire, comprenant notamment le composé actif du primaire comme du silane, disposée entre le matériau élastomère et l'insert métallique et assurant l'adhésion de ces deux éléments. Cette couche adhésive s'étend avantageusement sur toute la surface de contact des deux matériaux, et de préférence sur toute la surface extérieure de l'insert métallique.

## Revendications

1. Procédé de fabrication d'un composant horloger comprenant :
- une première étape (E1) consistant à disposer un insert métallique dans un moule d'injection, une surface dudit insert métallique étant au moins partiellement revêtue d'un primaire,
- une deuxième étape d'injection (E2) d'un matériau élastomère dans le moule d'injection pour surmouler le matériau élastomère sur l'insert métallique,
- une troisième étape de vulcanisation (E3) du matériau élastomère, la température du moule d'injection étant variable, le procédé étant **caractérisé en ce qu'**il comprend une étape d'augmentation (E31) de la température du moule d'injection entre une première température à un premier instant durant la deuxième étape d'injection (E2), et une deuxième température supérieure à la première température à un deuxième instant, durant la troisième étape de vulcanisation (E3), et **en ce qu'**il comprend une première phase (P1) au cours de laquelle le moule d'injection atteint notamment la première température, et une deuxième phase (P2) consistant à chauffer le moule d'injection à la deuxième température correspondant sensiblement à la température de vulcanisation du matériau élastomère, lors de l'étape de vulcanisation (E3), permettant de vulcaniser le matériau élastomère injecté lors de l'étape d'injection (E2), la première température étant inférieure à la température maximale admissible par ledit primaire, la température maximale admissible étant la température à laquelle le primaire se dégrade.

2. Procédé de fabrication d'un composant horloger selon la revendication 1, **caractérisé en ce que** la première température et/ou la durée d'une première phase (P1) au cours de laquelle le moule d'injection atteint notamment la première température est-sont définie(s) de sorte que la température de la surface de l'insert revêtue dudit primaire ne dépasse pas la température maximale admissible par ledit primaire avant que cette surface ne soit recouverte par le matériau élastomère injecté.

3. Procédé de fabrication d'un composant horloger selon l'une des revendications précédentes, **caractérisé en ce que** le moule d'injection est porté et maintenu à la première température durant tout ou partie de la deuxième étape d'injection (E2) et **en ce que** la deuxième température du moule d'injection est atteinte au moins à la fin de la troisième étape de vulcanisation (E3).

4. Procédé de fabrication d'un composant horloger selon l'une des revendications précédentes, **caractérisé en ce qu'**il comprend une étape de refroidissement (E4) du moule d'injection avant le démoulage du composant horloger.

5. Procédé de fabrication d'un composant horloger selon l'une des revendications précédentes, **caractérisé en ce que** la première température est comprise entre 60 °C et 120 °C inclus, voire entre 70 °C et 110 °C inclus, voire entre 80 °C et 100 °C inclus, et/ou **en ce que** la deuxième température est comprise entre 150 °C et 220 °C inclus, voire entre 160 °C et 200 °C inclus, voire sensiblement égale à 180 °C.

6. Procédé de fabrication d'un composant horloger selon l'une des revendications précédentes, **caractérisé en ce qu'**il comprend tout ou partie des étapes suivantes :
- Le maintien de la température du moule d'injection à la première température pendant toute la deuxième étape d'injection (E2) ;
- Une augmentation sensiblement linéaire de la température du moule d'injection entre la première et la deuxième température ;
- Une augmentation de la température du moule d'injection présentant au moins un palier de température et au moins une rampe de température, ou présentant deux paliers ou plus de deux paliers de température et/ou plus d'une rampe de température.

7. Procédé de fabrication d'un composant horloger selon l'une des revendications précédentes, **caractérisé en ce que** la température maximale admissible par le primaire est inférieure ou égale à 120 °C, voire inférieure ou égale à 100 °C, voire inférieure ou égale à 80 °C.

8. Procédé de fabrication d'un composant horloger selon l'une des revendications précédentes, **caractérisé en ce que** l'insert métallique comprend un métal super-élastique, notamment un alliage d'or et/ou d'argent, ou du platine, et/ou **en ce que** le matériau élastomère est un fluoroélastomère, par exemple du type FKM.

9. Procédé de fabrication d'un composant horloger selon l'une des revendications précédentes, **caractérisé en ce qu'**il comprend une nouvelle étape d'injection d'un deuxième matériau élastomère après l'étape de vulcanisation (E3) du premier matériau élastomère, dans le même moule d'injection que celui utilisé pour l'étape d'injection d'un matériau élastomère surmoulé sur l'insert métallique, et **en ce qu'**il comprend une étape préalable à la nouvelle étape d'injection de chauffage ou de refroidissement du moule d'injection à une température qui garantit la bonne adhésion du deuxième matériau élastomère sur le premier matériau élastomère.

## Patentansprüche

1. Verfahren zur Herstellung einer Uhrenkomponente, welches umfasst:
- einen ersten Schritt (E1), der darin besteht, einen metallischen Einsatz in einer Spritzform anzuordnen, wobei eine Fläche des metallischen Einsatzes wenigstens teilweise mit einer Grundierung beschichtet ist,
- einen zweiten Schritt des Einspritzens (E2) eines elastomeren Materials in die Spritzform, um das elastomere Material auf den metallischen Einsatz aufzuformen,
- einen dritten Schritt der Vulkanisation (E3) des elastomeren Materials, wobei die Temperatur der Spritzform variabel ist, wobei das Verfahren **dadurch gekennzeichnet ist, dass** es einen Schritt der Erhöhung (E31) der Temperatur der Spritzform von einer ersten Temperatur zu einem ersten Zeitpunkt während des zweiten Schrittes des Einspritzens (E2) auf eine zweite Temperatur, die höher als die erste Temperatur ist, zu einem zweiten Zeitpunkt während des dritten Schrittes der Vulkanisation (E3) umfasst, und dadurch, dass es eine erste Phase (P1) umfasst, in deren Verlauf die Spritzform insbesondere die erste Temperatur erreicht, und eine zweite Phase (P2), die darin besteht, die Spritzform auf die zweite Temperatur zu erwärmen, die im Wesentlichen der Vulkanisationstemperatur des elastomeren Materials im Schritt der Vulkanisation (E3) entspricht, die es ermöglicht, das im Schritt des Einspritzens (E2) eingespritzte elastomere Material zu vulkanisieren, wobei die erste Temperatur niedriger als die zulässige maximale Temperatur für die Grundierung ist, wobei die zulässige maximale Temperatur die Temperatur ist, bei welcher sich die Grundierung auflöst.

2. Verfahren zur Herstellung einer Uhrenkomponente nach Anspruch 1, **dadurch gekennzeichnet, dass** die erste Temperatur und/oder die Dauer einer ersten Phase (P1), in deren Verlauf die Spritzform insbesondere die erste Temperatur erreicht, so definiert sind/ist, dass die Temperatur der Fläche der Spritzform, die mit der Grundierung beschichtet ist, die zulässige maximale Temperatur für die Grundierung nicht überschreitet, bevor diese Fläche mit dem eingespritzten elastomeren Material bedeckt ist.

3. Verfahren zur Herstellung einer Uhrenkomponente nach einem der vorhergehenden Ansprüche, **dadurch gekennzeichnet, dass** die Spritzform während des gesamten zweiten Schrittes des Einspritzens (E2) oder eines Teils davon auf die erste Temperatur gebracht und auf ihr gehalten wird, und dadurch, dass die zweite Temperatur der Spritzform wenigstens am Ende des dritten Schrittes der Vulkanisation (E3) erreicht wird.

4. Verfahren zur Herstellung einer Uhrenkomponente nach einem der vorhergehenden Ansprüche, **dadurch gekennzeichnet, dass** es einen Schritt der Kühlung (E4) der Spritzform vor der Entformung der Uhrenkomponente umfasst.

5. Verfahren zur Herstellung einer Uhrenkomponente nach einem der vorhergehenden Ansprüche, **dadurch gekennzeichnet, dass** die erste Temperatur 60 °C bis 120 °C beträgt, insbesondere 70 °C bis 110 °C, insbesondere 80 °C bis 100 °C, und/oder dadurch, dass die zweite Temperatur 150 °C bis 220 °C beträgt, insbesondere 160 °C bis 200 °C, und insbesondere im Wesentlichen gleich 180 °C ist.

6. Verfahren zur Herstellung einer Uhrenkomponente nach einem der vorhergehenden Ansprüche, **dadurch gekennzeichnet, dass** es alle folgenden Schritte oder einige davon umfasst:
- das Halten der Temperatur der Spritzform auf der ersten Temperatur während des gesamten zweiten Schrittes des Einspritzens (E2);
- eine im Wesentlichen lineare Erhöhung der Temperatur der Spritzform von der ersten auf die zweite Temperatur;
- eine Erhöhung der Temperatur der Spritzform, die wenigstens einen Abschnitt konstanter Temperatur und wenigstens eine Temperaturrampe aufweist, oder zwei Abschnitte oder mehr als zwei Abschnitte konstanter Temperatur und/oder mehr als eine Temperaturrampe aufweist.

7. Verfahren zur Herstellung einer Uhrenkomponente nach einem der vorhergehenden Ansprüche, **dadurch gekennzeichnet, dass** die zulässige maximale Temperatur für die Grundierung kleiner oder gleich 120 °C ist, insbesondere kleiner oder gleich 100 °C, insbesondere kleiner oder gleich 80 °C.

8. Verfahren zur Herstellung einer Uhrenkomponente nach einem der vorhergehenden Ansprüche, **dadurch gekennzeichnet, dass** der metallische Einsatz ein superelastisches Metall umfasst, insbesondere eine Legierung von Gold und/oder von Silber und/oder von Platin, und/oder dadurch, dass das elastomere Material ein Fluorelastomer ist, zum Beispiel vom Typ FKM.

9. Verfahren zur Herstellung einer Uhrenkomponente nach einem der vorhergehenden Ansprüche, **dadurch gekennzeichnet, dass** es einen neuen Schritt des Einspritzens eines zweiten elastomeren Materials nach dem Schritt der Vulkanisation (E3) des ersten elastomeren Materials umfasst, in dieselbe Spritzform, die für den Schritt des Einspritzens eines auf den metallischen Einsatz aufgeformten elastomeren Materials verwendet wurde, und dadurch, dass es einen dem neuen Schritt des Einspritzens vorausgehenden Schritt der Erwärmung oder Kühlung der Spritzform auf eine Temperatur umfasst, welche die gute Haftung des zweiten elastomeren Materials auf dem ersten elastomeren Material garantiert.

## Claims

1. A process for manufacturing a timepiece component comprising:
- a first step (E1) consisting in arranging a metal insert in an injection mold, one surface of said metal insert being at least partially coated with a primer,
- a second step (E2) of injecting an elastomer material into the injection mold in order to overmold the elastomer material over the metal insert,
- a third step (E3) of vulcanizing the elastomer material, the temperature of the injection mold being variable, the process being **characterized in that** it comprises a step (E31) of increasing the temperature of the injection mold between a first temperature at a first instant during the injection second step (E2), and a second temperature higher than the first temperature at a second instant, during the vulcanization third step (E3) and **in that** it comprises a first phase (P1) during which the injection mold reaches in particular the first temperature, and a second phase (P2) consisting in heating the injection mold to the second temperature corresponding substantially to the vulcanization temperature of the elastomer material, during the vulcanization step (E3), enabling the elastomer material injected during the injection step (E2) to be vulcanized, the first temperature being below the maximum allowable temperature for said primer, the maximum allowable temperature being the temperature at which the primer degrades.

2. The process for manufacturing a timepiece component as claimed in claim 1, **characterized in that** the first temperature and/or the duration of a first phase (P1) during which the injection mold reaches in particular the first temperature is/are defined so that the temperature of the surface of the insert coated with said primer does not exceed the maximum allowable temperature for said primer before this surface is covered by the elastomer material injected.

3. The process for manufacturing a timepiece component as claimed in one of the preceding claims, **characterized in that** the injection mold is brought to and maintained at the first temperature during all or some of the injection second step (E2) and **in that** the second temperature of the injection mold is reached at least at the end of the vulcanization third step (E3).

4. The process for manufacturing a timepiece component as claimed in one of the preceding claims, **characterized in that** it comprises a step (E4) of cooling the injection mold before the timepiece component is removed from the mold.

5. The process for manufacturing a timepiece component as claimed in one of the preceding claims, **characterized in that** the first temperature is between 60°C and 120°C inclusive, or between 70°C and 110°C inclusive, or between 80°C and 100°C inclusive, and/or **in that** the second temperature is between 150°C and 220°C inclusive, or between 160°C and 200°C inclusive, or substantially equal to 180°C.

6. The process for manufacturing a timepiece component as claimed in one of the preceding claims, **characterized in that** it comprises all or some of the following steps:
- the maintaining of the temperature of the injection mold at the first temperature throughout the injection second step (E2);
- a substantially linear increase in the temperature of the injection mold between the first and second temperatures;
- an increase in the temperature of the injection mold having at least one temperature hold and at least one temperature ramp, or having two holds or more than two temperature holds and/or more than one temperature ramp.

7. The process for manufacturing a timepiece component as claimed in one of the preceding claims, **characterized in that** the maximum allowable temperature for the primer is below or equal to 120°C, or below or equal to 100°C, or below or equal to 80°C.

8. The process for manufacturing a timepiece component as claimed in one of the preceding claims, **characterized in that** the metal insert comprises a superelastic metal, in particular an alloy of gold and/or of silver, or platinum, and/or **in that** the elastomer material is a fluoroelastomer, for example of FKM type.

9. The process for manufacturing a timepiece component as claimed in one of the preceding claims, **characterized in that** it comprises a new step of injecting a second elastomer material after the step (E3) of vulcanizing the first elastomer material, in the same injection mold as the one used for the step of injecting an elastomer material overmoulded over the metal insert, and **in that** it comprises a step, prior to the new injection step, of heating or of cooling the injection mold to a temperature that guarantees the good adhesion of the second elastomer material to the first elastomer material.
